# EUROPEAN PATENT SPECIFICATION

(11) **EP 4 108 142 B1**
(45) Date of publication and mention of the grant of the patent: **16.08.2023**
(21) Application number: 22177427.6
(22) Date of filing: 07.06.2022
(51) Int. Cl.: A47J 31/00, A47J 31/36, A47J 31/06, A47J 31/46, A47J 31/52, A47J 31/44

(54) **ELECTRIC ESPRESSO COFFEE MACHINE EQUIPPED AND CONCEIVED TO ALSO DISPENSE AMERICAN COFFEE**
ELEKTRISCHE ESPRESSOKAFFEEMASCHINE AUSGESTATTET UND KONZIPIERT AUCH AMERIKANISCHEN KAFFEE AUSZUGEBEN
MACHINE À CAFÉ ESPRESSO ÉLECTRIQUE ÉQUIPÉE ET CONÇUE POUR DISTRIBUER AUSSI DU CAFÉ AMÉRICAIN

(30) Priority: 22.06.2021 IT 202100016391
(43) Date of publication of application: 28.12.2022
(62) Divisional of application: 22198633.4
(73) Proprietor: SIMONELLI GROUP S.P.A., 62020 Belforte del Chienti (MC) (IT)
(72) Inventor: PARRINI, Mauro, 63821 Porto Sant'Elpidio (FM) (IT); CINGOLANI, Claudi Enrico, 62032 Camerino (MC) (IT)
(74) Representative: Baldi, Claudio

(56) References cited:
- EP-A1- 3 195 764
- EP-A1- 3 659 475
- EP-A2- 1 576 912
- US-A- 5 736 042
- US-A1- 2016 183 717

## Description

The present invention relates to an electric espresso machine equipped and conceived to also dispense American coffee.

There are differences in the preparation of espresso coffee with respect to American coffee.

Espresso coffee is prepared by pouring pressurized hot water through a compact, pressed lump of roasted, finely ground coffee in order to obtain a thick, creamy beverage in a time of about thirty seconds. Espresso coffee is served in a small cup and has a high concentration level that gives a well-defined, strong and aromatic taste.

On the other hand, American coffee, which is also known as filter coffee, is obtained by percolation, that is to say by pouring boiling water at atmospheric pressure through an appropriate amount of ground coffee contained in a filter, allowing the water to drip by gravity inside a receptacle placed under the filter.

An increasing demand for beverages made with coffee and milk has resulted in the design of an increasing number of dedicated machines in order to dispense each beverage with its features, while respecting specific preparation processes.

Evidently, the diversity of the machines and their presence in the same establishment entails not only higher purchase costs, but also problems in terms of availability and organization of the space, in view of the considerable overall dimensions of said machines. By way of example, although it can be used for the preparation of hot beverages, such as hot milk, with or without foam, or hot water for the preparation of hot drinks, such as teas or infusions, a conventional espresso coffee machine cannot be used for the preparation of American coffee (filter coffee). In fact, a conventional filter coffee machine uses hot water at atmospheric pressure, which percolates by gravity through the filter that contains uncompacted ground coffee. In contrast, in an espresso coffee machine, a pump provides for the hot water to be pressurized and conveyed into a dispensing unit wherein the filter holder is tightly engaged. The filter holder contains a dose of pressed coffee powder and the water passes through the coffee powder in a few seconds, precisely because of its high pressure, which is usually 9 bars.

Therefore, if a coffee shop wants to give customers the option of ordering both an espresso coffee and a filter coffee, two different machines, one for each type of beverage, must be provided.

EP3659475 discloses a coffee machine with a proportional pre-infusion system used to wet the coffee powder in the filter holder before the liquid coffee is dispensed.

The purpose of the present invention is to equip and conceive a typical espresso coffee machine in such a way to also dispense American coffee.

Such a purpose has been achieved by the coffee machine according to the invention, the main features of which are pointed out in the attached independent claims.

Advantageous embodiments appear from the dependent claims.

The coffee machine according to the invention is characterized by the fact that it is equipped with two different types of filter holders:
- a first, completely traditional filter holder for the preparation of espresso coffee;
- a second, completely innovative filter holder for the preparation of American coffee.

The coffee machine according to the invention is also characterized in that it is equipped with a special water system and with a control unit that allow the hot water to flow slowly through said innovative filter holder for American coffee by simple gravity, thus implementing the percolation process at the base of the preparation of American coffee.

For the sake of explanatory clarity, the description of the coffee machine according to the invention continues with reference to the attached drawings, which are shown for illustrative and non-limiting purposes only, wherein:
Fig. 1 is a schematic view of a system of the machine according to the invention, with a filter holder for espresso coffee;
Fig. 2 is a perspective exploded view of a traditional filter holder for the preparation of espresso coffee;
Fig. 3 is a perspective exploded view of an innovative filter holder for the preparation of American coffee;
Fig. 4 is a sectional view of the filter holder of Fig. 3 in assembled condition;
Fig. 5 is a Cartesian diagram illustrating a pulse train for controlling the infusion solenoid valve of the coffee machine according to the invention;
Fig. 6 is a schematic view illustrating a system of the coffee machine according to the invention, with a filter holder for American coffee.

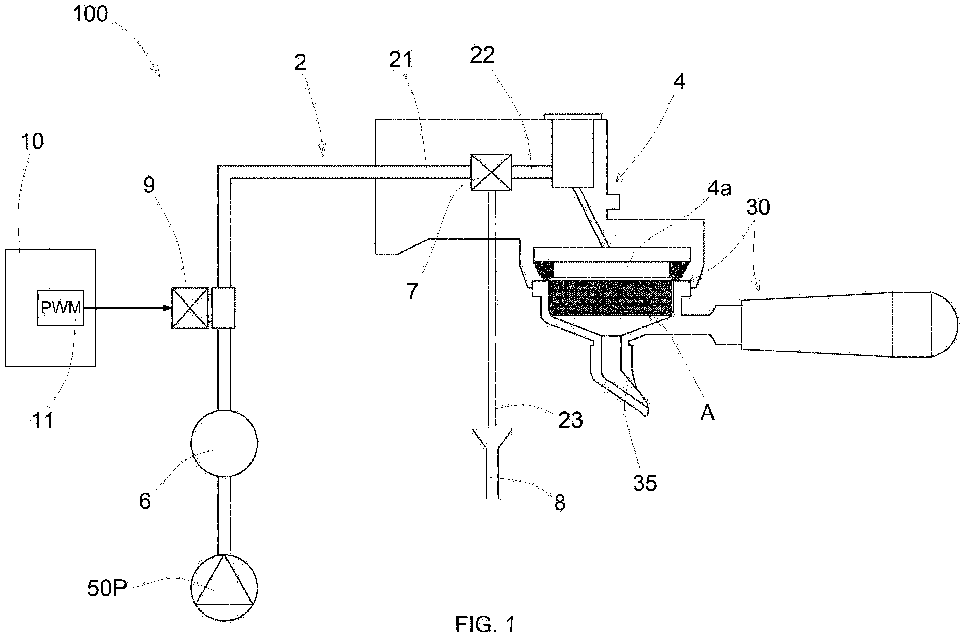

As shown in Fig. 1, the coffee machine (100) according to the invention comprises:
- a water system (2) in which pressurized hot water circulates:
- at least one dispensing unit (4) fed with pressurized hot water
- a first filter holder (30) for the preparation of espresso coffee.

The dispensing unit (4) comprises a dispensing mouth (4a) in which the first filter holder (30) is arranged.

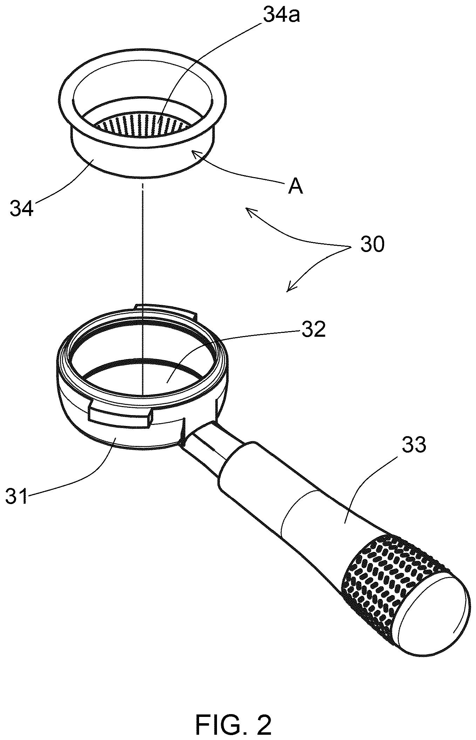

Referring to Fig. 2, the first filter holder (30) comprises a body (31) having a seat (32) with circular shape. The body (31) of the filter holder is suitable for being coupled to the dispensing mouth (4a) of the dispensing unit (4) by means of bayonet coupling means.

A handle (33) protrudes externally from the body (31) of the filter holder. The handle (33) is manually held by the operator to facilitate the repeated manual operation that is carried out to engage and disengage the filter holder (30) with/from the dispensing unit (4).

The seat (32) of the filter holder houses a first filter (A) for the preparation of espresso coffee. The first filter (A) consists of a tub (34) with circular shape, which is suitable for receiving a compact dose of coffee powder.

One or more spouts (35) protrude inferiorly from the body (31) and communicate with the seat (32) of the filter holder.

The tub (34) of the first filter has a perforated bottom wall (34a) provided with a plurality of small holes suitable for holding the ground coffee powder while allowing water to pass through, in such a way that the beverage can be poured into a cup through the spout (35).

The water system (2) comprises a pump (50P) suitable for feeding pressurized water at a pressure of approximately 9 to 11 bar, generally from a reservoir (not shown in Fig. 1).

A heater (6) is arranged in the water system (2) between the pump (50P) and the dispensing unit (4). The heater (6) is suitable for heating the water to a temperature of approximately 88-96°C, that is to say to a suitable temperature for obtaining the beverage.

A dispensing valve (7) is arranged in the dispensing unit (4) to enable or disable the delivery of water from the water system (2) to said at least one dispensing unit (4).

The dispensing valve (7) is a three-way solenoid valve and is connected to three conduits:
- an inlet conduit (21) communicating with the water system (2),
- an outlet conduit (22) communicating with said at least dispensing unit (4), and
- a drain conduit (23) communicating with a drain (8).

While the beverage is being extracted, the dispensing valve (7) opens the communication between the inlet conduit (21) and the outlet conduit (22) and closes the communication to the drain conduit (23).

Once the beverage has been extracted, the dispensing valve (7) opens the communication between the outlet conduit (22) and the drain conduit (23) and closes the communication to the inlet conduit (21).

In this way, once the beverage has been extracted, the water remaining between the dose of coffee contained in said first filter (A) and the dispensing unit (4) is drained, in such a way as to eliminate the pressure in this area of the dispensing unit and remove the first filter holder (30), without any leaks of the high-pressure water from the water system (2).

The coffee machine (100) also comprises a control unit (10) in order to program and control the operation of the coffee machine (100).

The coffee machine (100) is characterized by the fact that it is equipped with a second filter holder (50) which is specifically conceived for the preparation of American coffee.

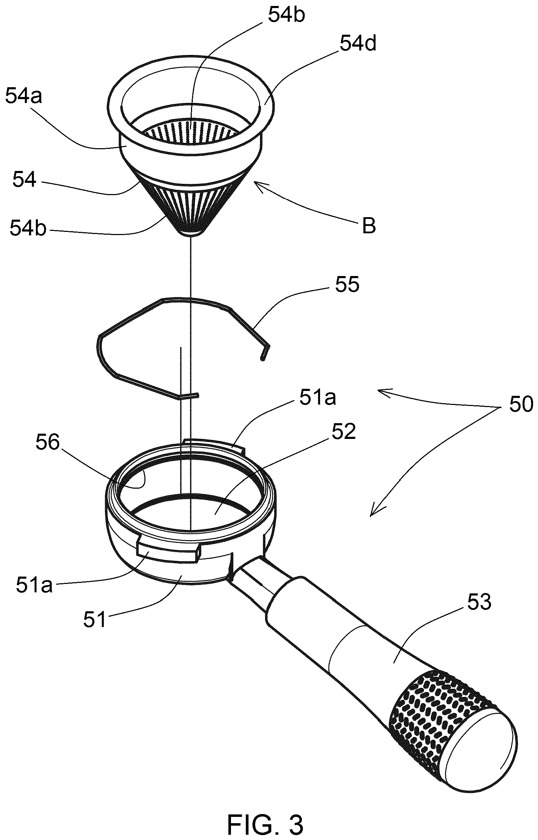

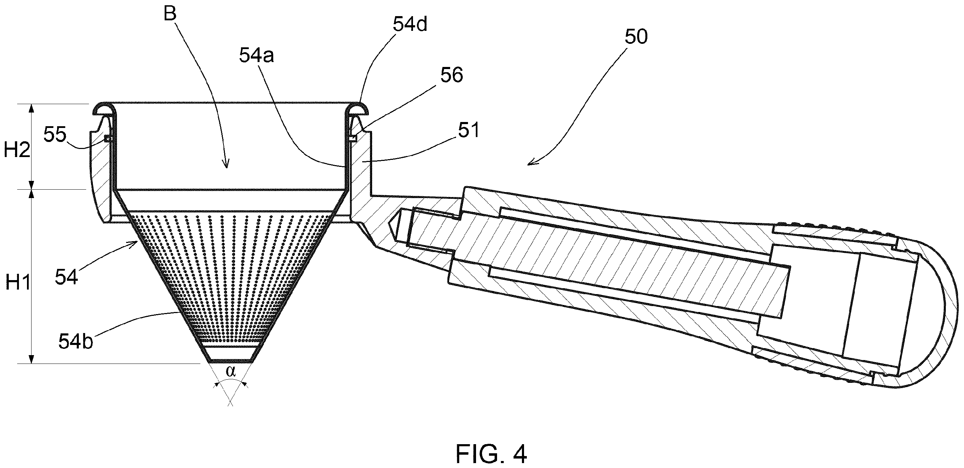

Referring to Figs. 3 and 4, the second filter holder (50) comprises an annular body (51) that defines a circular housing (52). Externally, the body (51) is dimensioned and shaped in such a way to be coupled to the dispensing mouth (4a) of the dispensing unit (4) by means of bayonet coupling means (51a).

A handle (53) protrudes externally from the body (51) of the second filter holder in order to facilitate the repeated manual operation that is carried out to engage and disengage the second filter holder (50) with/from the dispensing unit (4).

As shown in Fig. 3, the bayonet coupling means (51a) comprise two tabs that protrude radially from the body (51) of the second filter holder to provide a bayonet coupling between the second filter holder (50) and the dispensing mouth (4a) of the dispensing unit (4).

Said seat (52) of the second filter holder houses a second filter (B) for the preparation of American coffee. The second filter (B) consists of a funnel-shaped basket (54).

The basket (54) comprises an upper collar (54a) with cylindrical shape, which is joined with a lower hopper (54b) of conical shape.

Referring to Fig. 4, the lower hopper (54b) has a greater height than a height (H2) of the upper collar (54a) and a coning angle (α) lower than 90°.

Such a configuration increases the capacity of the basket (54). Indeed, it should be noted that the amount of coffee powder necessary to make an American coffee is much higher than the amount used to make an espresso coffee.

The upper collar (54a) is suitably dimensioned for being housed inside the seat (52) of the body (51) of the second filter holder. In this way, the lower hopper (54b) protrudes below the body (51) of the second filter holder. The lower hopper (54b) has perforated walls provided with a plurality of holes, as shown in Fig. 4.

Preferably, the hopper (54b) is made of two layers of filtering mesh, namely a perforated inner layer and a perforated outer layer. The inner layer of filtering mesh has smaller holes than the outer layer of filtering mesh. The holes of the inner layer preferably have a diameter of 75 µm. The holes of the outer layer preferably have a diameter of 0.3 mm.

A flange (54d) protrudes radially outwards from an opening of said upper collar (54a). The flange (54d) is rested on an edge of the annular body (51) when said second filter (B) is lowered inside the seat (52) of the second filter holder.

The seat (52) of the body of the second filter holder has an annular groove (56) to accommodate a retention spring (55) shaped like an open-ring wire. The retention spring (55) is suitable for tightening and holding the basket (54), as shown in Fig. 4.

The water system (2) and the control unit (10) let the hot water flow slowly through the second filter holder (50) for the preparation of American coffee by simple gravity, thus implementing the percolation process at the base of the preparation of American coffee.

The water system (2) is equipped with an infusion valve (9) disposed upstream the dispensing valve (7).

The infusion valve (9) is a two-way pulsing solenoid valve; otherwise said, such an infusion valve (9) has a shutter capable of opening and closing the communication between the two ways of the solenoid valve with an ON/OFF system, in a pulsed mode, with programmable opening and closing times.

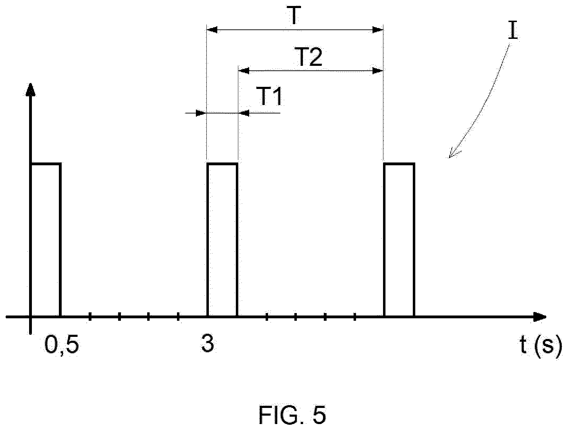

The infusion valve (9) is connected to the control unit (10), in which switching means (11) are provided to open and close the infusion valve (9) with a pulse train (I) (Fig. 5) with suitable duration and frequency in order to implement said percolation process for the preparation of American coffee.

By way of example, the switching means (11) can be a relay or a PWM (pulse-width modulation) power supply.

The intermittent opening and closing of the infusion valve (9) allows the dispensing unit (4) to be fed with a pulsating water flow rate.

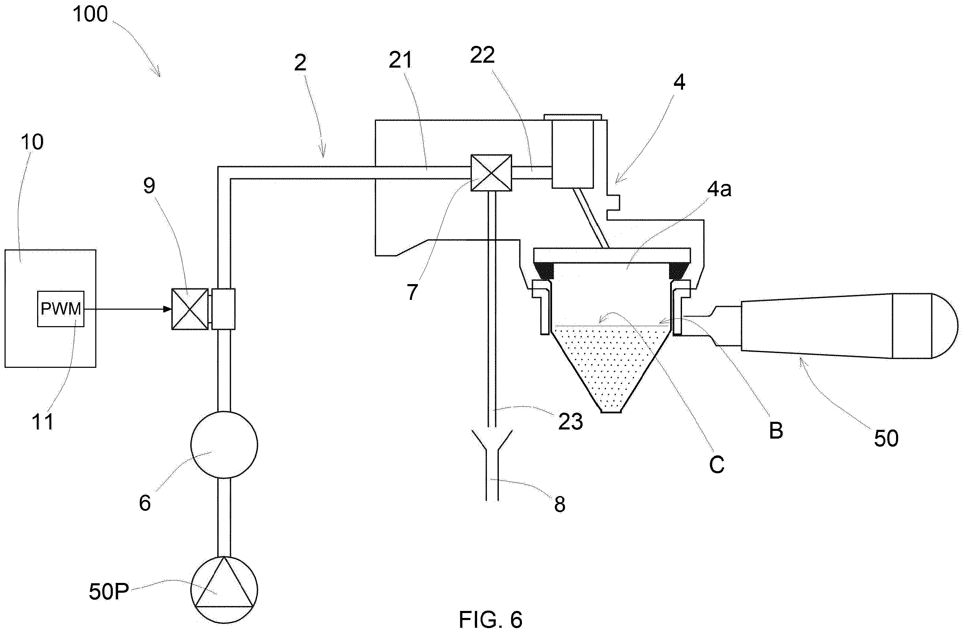

Referring to Fig. 6, when the second filter holder (50) is coupled to the dispensing unit (4), a chamber (C) is formed between the second filter (B) and the dispensing unit (4), which contains the coffee powder suitable for preparing the American coffee. Since the coffee powder is not compressed in the second filter (B), there is a volume of air between the coffee powder grains in the chamber (C).

To prevent the creation of a pressure higher than atmospheric pressure in the chamber (C), the volume of water fed into chamber (C) each time must be lower than the volume of air in the chamber (C). Such a volume of water can be adjusted according to the time in which the infusion valve (9) remains open.

When the second filter holder (50) is tightly engaged on the dispensing unit (4) and a button for dispensing American coffee is pushed, the control unit (10) imposes an operating mode on the coffee machine (100) according to which the dispensing unit (4) is fed with intermittent water jet. During the dispensing of each jet of water, the volume of water that reaches the dispensing unit (4) is not sufficient to cause an increase in pressure in the chamber (C). Therefore, the water is fed from the dispensing unit (4) to the coffee contained in the basket (54) of the second filter holder at a pressure that is basically equal to the atmospheric pressure.

The time interval between two successive jets of water must be long enough for the amount of water dispensed during a previous jet of water to percolate completely through the coffee powder contained in the basket (54) by simple gravity.

The jets of water are repeated cyclically until the desired dose of beverage has completely percolated into the cup disposed under the dispensing unit (4) wherein the second filter holder (50) is engaged.

The pulse train (I) in Fig. 5 shows pulses having a duration equal to the opening time interval (T1) in which the infusion valve is open and a distance between pulses equal to the closing time interval (T2) in which the infusion valve is closed.

The pulse train (I) comprises:
- pulses having a duration equal to the opening time interval (T1),
- a period (T = T1 + T2) equal to the sum of the opening time interval (T1) and the closing time interval (T2); and
- a frequency (f = 1/T) equal to the inverse of the period.

In this way:
- a variation in the duration of the pulse will vary the volume of water in a jet of water,
- a variation in the frequency of the pulse train (I) will vary the closing time intervals (T2) in which the dispensing valve remains closed to allow the percolation of water coming from the preceding jet of water, and
- a variation in the number of pulses will vary the total amount of dispensed beverage.

Experimentally, it was verified that the volume of air contained in the chamber (C) is greater than 3 cm³.

Therefore, the opening time interval (T1) in which the infusion valve is to remain open must be such to allow the passage of a volume of water that is lower than or equal to 3 cm³. In such a case, the opening time interval (T1) in which the infusion valve is to remain open is lower than or equal to 0.5 seconds.

A volume of water of 3 cm³ takes less than 2.5 seconds to percolate through the coffee powder contained in the second filter (B). Therefore, each closing time interval (T2) in which the infusion valve remains closed must be higher than or equal to 2.5 seconds.

In the case where a volume of 120 cm³ of American coffee is to be dispensed, it will be necessary to send 40 jets of water to the filter holder (50), each jet of water containing 3 cc of water. If the open time intervals (T1), in which the infusion valve is open, have a duration of 0.5 seconds and the closing time intervals (T2), in which the infusion valve is closed, have a duration of 2.5 seconds, 120 seconds will be required for dispensing 120 cm³ of American coffee.

It should be noted that the dispensing valve (7) remains open for the time necessary to complete the number of intermittent jets of water that are programmed in order to pour a desired dose of American coffee into the cup.

The control unit (10) also comprises a memory and programming unit in which the number of pulses of the pulse train (I), the duration of each pulse, and the frequency of the pulse train can be set.

When the first filter holder (30) is tightly engaged on the dispensing unit (4) and the button for the preparation of an espresso coffee is operated, said control unit (10) imposes an operating mode on the coffee machine (100) according to which the infusion valve (9) remains open for the entire opening time of the dispensing valve (7), whereby the dispensing unit (4) is supplied, for the entire programmed time, with a continuous flow of hot water that passes through said first filter (A) under pressure.

In order to make an espresso coffee, the following steps must be implemented:
- engaging the first filter holder (30) on a dispensing unit (4) after filling said first filter (A) with coffee powder;
- opening the dispensing valve (7);
- keeping the dispensing valve (9) open for the entire opening time of the dispensing valve (7);
- closing the dispensing valve (7) when the beverage has been dispensed.

In order to make an American coffee, the following steps must be implemented:
- engaging the second filter holder (50) on a dispensing unit (4) after filling the second filter (B) with coffee powder;
- opening the dispensing valve (7);
- opening and closing the infusion valve (9) intermittently and in such a way that the volume of water that is poured into the second filter (B) - at each opening time interval of the infusion valve (9) - is lower than the volume of air contained in the mass of coffee powder and in the chamber defined by the dispensing unit (4) and by the second filter (B), and the time interval between two successive openings of the infusion valve (9) is long enough for the amount of water dispensed during the previous opening time interval to percolate completely through the basket (54);
- closing the dispensing valve (7) when a full dose of beverage has been dispensed, that is to say, when the programmed number of opening and closing time intervals of the infusion valve (9) has been implemented.

The coffee machine (100) according to the invention may comprise several dispensing units (4) and provides that at least one of said dispensing units is dedicated to the preparation of American coffee and is fed with water at a lower temperature than the other dispensing units dedicated to the preparation of espresso coffee.

In fact, it should be noted hot water at a temperature of approximately 92°C and at a pressure of usually of 9 bar is used for espresso coffee, whereas hot water at atmospheric pressure at a temperature of approximately 88°C is preferably used for American coffee.

## Claims

1. Coffee machine (100) comprising:
- a water system (2) in which pressurized hot water circulates:
- at least one dispensing unit (4) supplied with pressurized hot water; said dispensing unit (4) comprising a delivery mouth (4a);
- a first filter holder (30) tightly coupled with the delivery mouth (4a) of said dispensing unit (4) and housing a first filter (A) for the preparation of espresso coffee; wherein said first filter (A) consists in a circular tub (34) with a bottom wall (34a) that is densely perforated with small holes;
- a dispensing valve (7) to enable/disable the supply of pressurized hot water to said at least one dispensing unit (4);
- an infusion valve (9) of ON/OFF type, disposed upstream said dispensing valve (7); and
- a control unit (10) for programming and controlling the operation of the coffee machine;
**characterized in that**
said coffee machine (100) also comprises a second filter holder (50) housing a second filter (B) suitable for containing coffee powder for the preparation of American coffee; wherein said second filter (B) consists in a basket (54) comprising an upper collar (54a) with cylindrical shape, which is joined on the bottom with a conical hopper (54b) perforated with a plurality of small holes; wherein said second filter holder (50) is tightly coupled with the dispensing mouth (4a) of said at least one dispensing unit (4), in such a way to define a chamber (C) between the second filter and the dispensing unit wherein the coffee powder is contained;
wherein said control unit (10) is adapted so that said infusion valve (9) is controlled by said control unit (10) according to two alternative operating modes:
- a first operating mode for espresso coffee, wherein the first filter holder (30) is coupled to the dispensing unit (4), according to which said infusion valve (9) is always open during the entire opening time of the dispensing valve (7), for dispensing espresso coffee through the first filter holder (30);
- a second operating mode for American coffee, wherein the second filter holder (50) is coupled to the dispensing unit (4), according to which said infusion valve (9) is intermittently opened and closed, in such a way that, at every opening time interval (T1) of the infusion valve (9), the volume of water poured into said second filter (B) is lower than the volume of air contained in the chamber (C) between the second filter (B) and the dispensing unit (4); and every closing time interval (T2) of the infusion valve (9) is sufficient for the amount of water dispensed during a preceding opening time interval of the infusion valve to percolate completely through the second filter (B).

2. The coffee machine (100) according to claim 1, wherein said control unit (10) comprises switching means (11) to control the infusion valve (9) with a pulse train (I).

3. The coffee machine (100) according to claim 2, wherein the control unit (10) comprises a memory and programming unit that is used to set a number of pulses of said pulse train, a duration of each pulse and a frequency of the pulse train.

4. The coffee machine (100) according to any one of the preceding claims, wherein said second filter holder (50) comprises an annular body (51) that defines a circular seat (52); wherein said basket (54) is housed in the seat (52) and said lower hopper (54c) protrudes inferiorly from said seat (52).

5. The coffee machine (100) according to any one of the preceding claims, comprising multiple dispensing units (4), wherein at least one dispensing unit is dedicated to the preparation of American coffee and is fed with water at a lower temperature than the other dispensing units dedicated to the preparation of espresso coffee.

6. Method for preparing an espresso coffee with the coffee machine (100) according to the preceding claims, comprising the following steps:
- engaging the first filter holder (30) on a dispensing unit (4) after filling the first filter (A) with coffee powder;
- opening the dispensing valve (7);
- keeping the infusion valve (9) open for the entire opening time of the dispensing valve (7); and
- closing the dispensing valve (7) when a full dose of beverage has been dispensed.

7. Method for preparing an American coffee with the coffee machine (100) according to any one of the preceding claims 1 to 5, comprising the following steps:
- engaging the second filter holder (50) on a dispensing unit (4) after filling the second filter (B) with coffee powder, in such a way to define a chamber (C) between the second filter and the dispensing unit wherein the coffee powder is contained;
- opening the dispensing valve (7);
- intermittently opening and closing the infusion valve (9) in such a way that, at every opening time interval (T1) of the infusion valve (9), the volume of water poured into the second filter (B) is lower than the volume of air contained in the chamber (C) between the second filter (B) and the dispensing unit (4); and every closing time interval (T2) of the infusion valve (9) is sufficient for the quantity of water dispensed during a previous opening time interval of the infusion valve to percolate completely through the second filter (B); and
- closing the dispensing valve (7) when a full dose of beverage has been dispensed.

## Patentansprüche

1. Kaffeemaschine (100), umfassend:
- ein Wassersystem (2), in dem druckbeaufschlagtes heißes Wasser zirkuliert;
- mindestens eine Ausgabeeinheit (4), die mit druckbeaufschlagtem heißem Wasser versorgt wird; wobei diese Ausgabeeinheit (4) eine Ausgabemündung (4a) umfasst;
- einen ersten Filterhalter (30), der mit der Ausgabemündung (4a) der Ausgabeeinheit (4) eng gekoppelt ist und einen ersten Filter (A) für die Zubereitung von Espresso-Kaffee aufnimmt; wobei der erste Filter (A) aus einem kreisförmigen Becher (34) besteht, der eine perforierte Bodenwand (34a) mit einer Vielzahl von kleinen Löchern aufweist;
- ein Ausgabemagnetventil (7) zum Aktivieren/Deaktivieren der Zufuhr von druckbeaufschlagtem heißem Wasser zu der mindestens einen Ausgabeeinheit (4);
- ein Infusionsmagnetventil (9) des Typs EIN/AUS, das stromaufwärts des Ausgabemagnetventils (7) angeordnet ist; und
- eine Steuereinheit (10) zur Programmierung und Steuerung des Betriebs der Kaffeemaschine;
**dadurch gekennzeichnet, dass**
die Kaffeemaschine (100) ferner einen zweiten Filterhalter (50) umfasst, der einen zweiten Filter (B) aufnimmt, der dazu bestimmt ist, Kaffeemehl für die Zubereitung von Kaffee nach amerikanischer Art zu enthalten; wobei der zweite Filter (B) einen Korb (54) umfasst, der einen oberen Bund (54a) mit zylindrischer Form umfasst, der am Boden mit einem konischen Trichter (54b) verbunden ist, der mit einer Vielzahl von kleinen Löchern perforiert ist; wobei der zweite Filterhalter (50) eng mit der Ausgabemündung (4a) der mindestens einen Ausgabeeinheit (4) gekoppelt ist, so dass eine Kammer (C) zwischen dem zweiten Filter und der Ausgabeeinheit definiert wird, in der das Kaffeemehl enthalten ist;
wobei die Steuereinheit (10) so angepasst ist, dass das Infusionsmagnetventil (9) durch die Steuereinheit (10) gemäß zwei alternativen Betriebsarten gesteuert wird:
- eine erste Betriebsart für Espresso-Kaffee, bei der der erste Filterhalter (30) mit der Ausgabeeinheit (4) gekoppelt ist, gemäß welcher das Infusionsmagnetventil (9) während der gesamten Öffnungszeit des Ausgabemagnetventils (7) für die Zubereitung von Espresso-Kaffee durch den ersten Filterhalter (30) geöffnet bleibt;
- eine zweite Betriebsart für Kaffee nach amerikanischer Art, bei der der zweite Filterhalter (50) mit der Ausgabeeinheit(4) gekoppelt ist, gemäß welcher das Infusionsmagnetventil (9) intermittierend geöffnet und geschlossen wird, so dass bei jedem Öffnungszeitintervall (T1) des Infusionsmagnetventils (9) das in den zweiten Filter (B) fließende Wasservolumen geringer ist als das in der Kammer (C) zwischen dem zweiten Filter (B) und der Ausgabeeinheit (4) enthaltene Luftvolumen; und jedes Schließzeitintervall (T2) des Infusionsmagnetventils (9) ausreicht, um die während eines vorangegangenen Öffnungszeitintervalls des Infusionsmagnetventils abgegebene Wassermenge vollständig durch den zweiten Filter (B) sickern zu lassen.

2. Kaffeemaschine (100) nach Anspruch 1, wobei die Steuereinheit (10) Schaltmittel (11) umfasst, um das Infusionsmagnetventil (9) mit einer Impulsfolge (I) zu steuern.

3. Kaffeemaschine (100) nach Anspruch 2, wobei die Steuereinheit (10) eine Speicher- und Programmiereinheit umfasst, die dazu dient, eine Anzahl von Impulsen der Impulsfolge, eine Dauer jedes Impulses und eine Impulsfolgefrequenz einzustellen.

4. Kaffeemaschine (100) nach einem der vorstehenden Ansprüche, wobei der zweite Filterhalter (50) einen ringförmigen Körper (51) umfasst, der einen kreisförmigen Sitz (52) definiert; wobei der Korb (54) in dem Sitz (52) untergebracht ist und der untere Trichter (54c) nach unten aus dem Sitz (52) vorsteht.

5. Kaffeemaschine (100) nach einem der vorstehenden Ansprüche, umfassend mehrere Ausgabeeinheiten (4), wobei mindestens eine Ausgabeeinheit für die Zubereitung von Kaffee nach amerikanischer Art bestimmt ist und mit Wasser mit einer niedrigeren Temperatur versorgt wird als die anderen Ausgabeeinheiten, die für die Zubereitung von Espresso-Kaffee bestimmt sind.

6. Verfahren zur Zubereitung eines Espresso-Kaffees mit der Kaffeemaschine (100) nach den vorstehenden Ansprüchen, umfassend die folgenden Schritte:
- Einsetzen des ersten Filterhalters (30) auf eine Ausgabeeinheit (4) nach Befüllen des ersten Filters (A) mit Kaffeemehl;
- Öffnen des Ausgabemagnetventils (7);
- Offenhalten des Infusionsmagnetventils (9) für die gesamte Öffnungszeit des Ausgabemagnetventils (7); und
- Schließen des Ausgabemagnetventils (7), wenn eine volle Portion des Getränks ausgegeben wurde.

7. Verfahren zur Zubereitung eines Kaffees nach amerikanischer Art mit der Kaffeemaschine (100) nach den Ansprüchen 1 bis 5, umfassend die folgenden Schritte:
- Einsetzen des zweiten Filterhalters (50) auf eine Ausgabeeinheit (4) nach Befüllen des zweiten Filters (B) mit Kaffeemehl, um eine Kammer (C) zwischen dem zweiten Filter und der Ausgabeeinheit zu definieren, in der das Kaffeepulver enthalten ist;
- Öffnen des Ausgabemagnetventils (7);
- intermittierendes Öffnen und Schließen des Infusionsmagnetventils (9), so dass in jedem Öffnungszeitintervall (T1) des Infusionsmagnetventils (9) das in den zweiten Filter (B) fließende Wasservolumen geringer ist als das in der Kammer (C) zwischen dem zweiten Filter (B) und der Ausgabeeinheit (4) enthaltene Luftvolumen; und jedes Schließzeitintervall (T2) des Infusionsmagnetventils (9) ausreicht, um die während eines vorangegangenen Öffnungszeitintervalls des Infusionsmagnetventils abgegebene Wassermenge vollständig durch den zweiten Filter (B) sickern zu lassen; und
- Schließen des Magnetventils (7), wenn eine volle Portion des Getränks ausgegeben wurde.

## Revendications

1. Machine à café (100) comprenant :
- un système hydraulique (2) dans lequel circule l'eau chaude sous pression ;
- au moins un groupe de percolation (4) alimenté avec de l'eau chaude sous pression ; ledit groupe de percolation (4) comprenant une bouche de distribution (4a) ;
- un premier porte-filtre (30) qui peut être couplé à étanchéité avec la bouche de distribution (4a) dudit groupe de percolation (4) et qui loge un premier filtre (A) pour la préparation de cafés expresso ; où ledit premier filtre (A) consiste en une cuvette (34) de forme circulaire ayant une paroi de fond (34a) perforée d'une pluralité de petits orifices ;
- une électrovanne de distribution (7) pour activer/désactiver l'alimentation d'eau chaude sous pression vers au moins un groupe de percolation (4) ;
- une électrovanne d'infusion (9), du type ON/OFF, positionnée en amont de ladite électrovanne de distribution (7) ; et
- une unité de commande (10) pour la programmation et la gestion du fonctionnement de la machine à café ;
**caractérisée en ce que**
ladite machine à café (100) comprend également un second porte-filtre (50) qui loge un second filtre (B) destiné à contenir du café en poudre pour la préparation de café long, connu comme café américain ; où ledit second filtre (B) consiste en un panier (54) comprenant un collier supérieur (54a) de forme cylindrique, qui se raccorde inférieurement avec une trémie inférieure (54b), de forme conique, perforée d'une pluralité de petits orifices ; où ledit second porte-filtre (50) peut être couplé à étanchéité avec la bouche de distribution (4a) de dit au moins un groupe de percolation (4), de manière à définir une chambre (C) entre le second filtre et le groupe de percolation dans lequel le café en poudre est contenu ;
où ladite unité de commande (10) est adaptée de manière à ce que ladite électrovanne d'infusion (9) est commandée par ladite unité de commande (10) selon deux modes de fonctionnement alternatifs :
- un premier mode pour le café expresso, où le premier porte-filtre (30) est couplé au groupe de percolation (4), prévoit que ladite électrovanne d'infusion (9) reste toujours ouverte pendant tout le temps d'ouverture de l'électrovanne de distribution (7), pour la percolation d'un café expresso, à travers le premier porte-filtre (30) ;
- un second mode pour le café américain, où le second porte-filtre (50) est couplé au groupe de percolation (4), prévoit que ladite électrovanne d'infusion (9) s'ouvre et se ferme de manière intermittente, de sorte que, pendant chaque intervalle de temps d'ouverture (T1) où l'électrovanne d'infusion (9) est ouverte, le volume d'eau chaude qui se déverse dans ledit second filtre (B) est inférieur au volume d'air contenu dans la chambre (C) entre le second filtre (B) et le groupe de percolation (4) ; et chaque intervalle de temps de fermeture (T2) où l'électrovanne d'infusion (9) est fermée est suffisant afin que la quantité d'eau distribuée pendant un intervalle de temps précédent, où l'électrovanne d'infusion était ouverte, percole complètement à travers le second filtre (B).

2. Machine à café (100) selon la revendication 1, où ladite unité de commande (10) comprend des moyens de commutation (11) qui commandent l'électrovanne d'infusion (9) avec un train d'impulsions (I).

3. Machine à café (100) selon la revendication 2, où l'unité de commande (10) comprend une unité de mémoire et de programmation dans laquelle on peut paramétrer un nombre d'impulsions dudit train d'impulsions, une durée de chaque impulsion et une fréquence du train d'impulsions.

4. Machine à café (100) selon l'une quelconque des revendications précédentes, où ledit second porte-filtre (50) comprend un corps (51) de forme annulaire qui délimite un emplacement (52) de forme circulaire ; où ledit panier (54) est logé dans l'emplacement (52) et ladite trémie inférieure (54c) déborde inférieurement dudit emplacement (52).

5. Machine à café (100) selon l'une quelconque des revendications précédentes, comprenant plusieurs groupes de percolation (4), où au moins un groupe de percolation est dédié à la préparation de café américain et alimenté avec de l'eau à température plus basse par rapport aux autres groupes de percolation dédiés à la préparation de café expresso.

6. Méthode pour la préparation d'un café expresso moyennant la machine à café (100) dont aux revendications précédentes comprenant les phases suivantes :
- engager le premier porte-filtre (30) sur un groupe de percolation (4) après avoir rempli le premier filtre (A) avec de la poudre de café ;
- ouvrir l'électrovanne de distribution (7) ;
- maintenir ouverte l'électrovanne d'infusion (9) pendant tout le temps d'ouverture de l'électrovanne de distribution (7) ; et
- fermer l'électrovanne de distribution (7) quand une dose complète de boisson a été percolée.

7. Méthode pour la préparation d'un café américain moyennant la machine à café (100) selon l'une quelconque des revendications de 1 à 5, comprenant les phases suivantes :
- engager le second porte-filtre (50) sur un groupe de percolation (4) après avoir rempli le second filtre (B) avec de la poudre de café, de manière à définir une chambre (C) entre le second filtre et le groupe de percolation dans lequel le café en poudre est contenu ;
- ouvrir l'électrovanne de distribution (7) ;
- ouvrir et fermer l'électrovanne d'infusion (9) de manière intermittente, de façon que, à chaque intervalle de temps d'ouverture (T1), pendant lequel l'électrovanne d'infusion (9) est ouverte, le volume d'eau qui se déverse dans ledit second filtre (B) est inférieur au volume d'air contenu dans la chambre (C) entre le second filtre (B) et le groupe de percolation (4) ; et chaque intervalle de temps de fermeture (T2), pendant lequel l'électrovanne d'infusion (9) est fermée, est suffisant afin que la quantité d'eau distribuée pendant un intervalle de temps précédent, où l'électrovanne d'infusion était ouverte, percole complètement à travers le second filtre (B) ; et
- fermer l'électrovanne de distribution (7) lorsqu'une dose complète de boisson a été percolée.
